# EUROPÄISCHE PATENTSCHRIFT

(11) **EP 0 480 352 B1**
(45) Veröffentlichungstag und Bekanntmachung des Hinweises auf die Patenterteilung: **30.11.1994**
(21) Anmeldenummer: 91117051.2
(22) Anmeldetag: 07.10.1991
(51) Int. Cl.: B60J 1/18

(54) **Durch einen Reissverschluss in einem Klappverdeck befestigbare Fensterscheibe und Verfahren zum Auswechseln eines Flächenabschnitts**
Window fixed by means of a slide fastener to soft top and procedure for the replacement of a part of a surface
Fenêtre fixée à une capote pliante par une fermeture à glissière et procédé pour le remplacement d'une partie de la surface

(30) Priorität: 08.10.1990 DE 4031866
(43) Veröffentlichungstag der Anmeldung: 15.04.1992
(73) Patentinhaber: Bayerische Motoren Werke Aktiengesellschaft, 80788 München (DE)
(72) Erfinder: Ball, Wilfried, W-8312 Dingolfing (DE); Schönenbach, Heinz, W-5630 Remscheid (DE); Bolte, Ludwig, W-8011 Kirchheim (DE); Stahmer, Michael, W-8000 München 60 (DE); Karl, Horst, W-8043 Unterföhring (DE)

(56) Entgegenhaltungen:
- DE-U- 8 808 137
- GB-A- 503 371

## Beschreibung

Die Erfindung bezieht sich auf eine durch einen Reißverschluß in einem Klappverdeck befestigbare Fensterscheibe und auf ein Verfahren zum Auswechseln eines Flächenabschnitts der im Oberbegriff der Patentansprüche 1 und 5 genannten und aus der DE-A-38 41 035 (EP-A-0 372 374) hervorgehenden Art.

An der aus dieser Druckschrift bekannten, aus flexiblem Kunststoffmaterial bestehenden Fensterscheibe ist ein Randstreifen durch Kleben und/oder Vernähen angebracht, wobei auf dem Randstreifen seinerseits - bedarfsweise unter Zwischenlage eines Befestigungsstreifens - der Rand der Fensteröffnung des Verdeckbezugs durch eine Klebeverbindung befestigt ist. Diese ist jedoch nicht nur umständllich und zeitaufwendig herzustellen, sondern bei einem erforderlichen Austausch einer Kratzer oder dgl. Beschädigungen aufweisenden Kunststoff-Fensterscheibe muß die Klebeverbindung in sehr zeitraubender Weise gelöst werden.

Aufgabe der Erfindung ist es daher, bei einer gemäß dem Oberbegriff des Patentanspruchs 1 am Bezug eines Klappverdecks befestigbaren Fensterscheibe den Randstreifen derart auszubilden, daß er rasch, in einfacher Weise und beliebig oft mit dem Rand der Fensteröffnung des Verdeckbezugs verbindbar ist. Ferner ist ein Verfahren zum Herstellen einer lösbaren Verbindung eines Flächenabschnitts, insbesondere einer Fensterscheibe, mit dem Bezug des Klappverdecks aufzuzeigen.

Zur Lösung der Aufgabe sind die in den Patentansprüchen 1 und 5 dargelegten Merkmale vorgesehen.

Da der Randstreifen erfindungsgemäß als eine U-förmige, aus gummielastischem Material bestehende Randeinfassung ausgebildet ist, braucht zur Aufnahme des Randes der Fensteröffnung des Verdeckbezugs lediglich der außenliegende Schenkel der U-förmigen Randeinfassung etwas nach außen gebogen und der Bezug in diese eingeführt zu werden, wobei die Randeinfassung schließlich durch die Eigenspannung ihres gummielastischen Materials wasserdicht am Verdeckbezug anliegt. Dies ist nicht nur rasch und mit vergleichsweise geringem Aufwand durchführbar, sondern kann vorteilhafterweise auch beliebig oft - also bei jedem erforderlichen Auswechseln einer Fensterscheibe - wiederholt werden, wobei auch die zusammenwirkenden Teile nicht beschädigt werden.

Zweckmäßigerweise trägt der innenliegende Schenkel der U-förmigen Randeinfassung ein am Verdeckbezug anliegendes Dichtband mit einer doppelseitigen Klebeschicht. Deren Außenseite ist dabei durch einen Papierstreifen abgedeckt, der vor dem Einführen des Verdeckbezugs in die U-förmige Randeinfassung abgezogen wird. Durch das Dichtband wird der Reißverschluß verdeckt und darüber hinaus die Dichtwirder U-förmigen Randeinfassung erhöht (Merkmale des Patentanspruchs 2).

Die beiden Schenkel der U-förmigen Randeinfassung verlaufen zu ihren freien Enden hin abgeschrägt, wobei der außenliegende Schenkel kürzer ist als der innenliegende Schenkel. Nach Anordnen des Verdeckbezugs in der U-förmigen Randeinfassung wird hierdurch in deren Querschnitt eine bis zu ihrem außenliegenden Schenkel verlaufende schräge Ebene gebildet, durch die ein gutes Ablaufen des Wassers am Randbereich der Fensteröffnung des Verdeckbezugs gewährleistet ist (Merkmale des Patentanspruchs 3).

Bei einer erfindungsgemäß befestigten, rechteckförmigen Heckscheibe sind die einander zugewandten Endabschnitte des Reißverschlusses von einer U-förmigen Sicherungsklammer durchsetzt, wobei die Endabschnitte der Schenkel der Sicherungsklammer an einer fahrzeuginnenseitigen Gegenplatte abgebogen anliegen. Hierdurch wird ein unbefugtes Entfernen der Heckscheibe über den Reißverschluß erheblich erschwert (Merkmale des Patentanspruchs 4).

Aus der DE-A-37 19 429 ist zwar ein Verfahren zum Auswechseln einer flexiblen Fensterscheibe oder dgl. eines Klappverdecks bekannt. Dabei muß jedoch die neue Fensterscheibe in den Verdeckbezug eingenäht werden, was nicht nur sehr zeitaufwendig ist, sondern üblicherweise auch von einer Fachkraft durchzuführen ist. Demgegenüber kann gemäß den Merkmalen der Patentansprüche 5 und 6 ein mit einem Reißverschluß und einer U-förmigen Randeinfassung versehener Flächenabschnitt, insbesondere eine flexible Heckscheibe, rasch und in sehr einfacher Weise gegen einen mit dem Verdeckbezug durch Nähen oder dgl. verbundenen Flächenabschnitt ausgewechselt werden. Hierzu wird lediglich das verbreiterte Halteband des ersten Teils des Reißverschlusses exakt an einem vorhandenen, innenliegenden Befestigungsstreifen des Verdeckbezugs angeklebt und daraufhin der auszuwechselnde Flächenabschnitt durch Auftrennen der Nähnaht entfernt. Schließlich wird der Rand des Verdeckbezugs in die U-förmige Randeinfassung eingeführt. Eine derart durch einen Reißverschluß in einen Verdeckbezug eingesetzte Fensterscheibe oder dgl. Flächenabschnitt kann natürlich auch mehrmals erneuert werden.

Ein Ausführungsbeispiel der Erfindung ist in der Zeichnung dargestellt und wird im folgenden erläutert. Es zeigt:
- Fig. 1: eine durch einen Reißverschluß an einem Verdeckbezug befestigte flexible Heckscheibe im Schnitt,
- Fig. 2: eine der Fig. 1 im wesentlichen entsprechende Befestigung der Heckscheibe, die jedoch nachgerüstet ist.

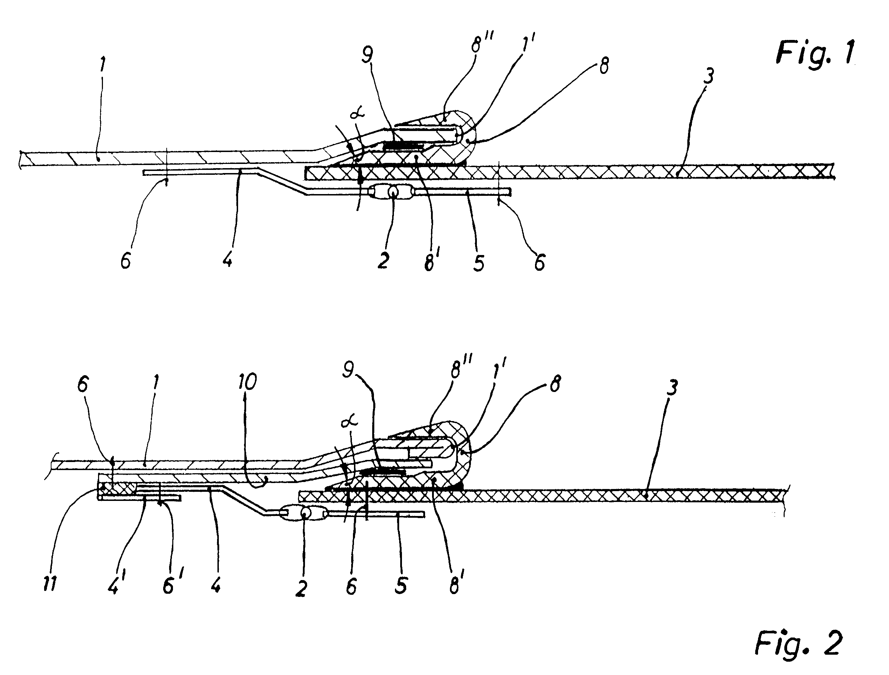

In Fig. 1 ist ein aus wetterfestem Textilmaterial bestehender Bezug 1 des Klappverdecks eines Cabriolets ersichtlich, wobei am fahrzeuginnenseitigen Randbereich der Fensteröffnung 1' des Verdeckbezugs 1 eine Fensterscheibe 3 über einen längs der Fensteröffnung 1' verlaufenden Reißverschluß 2 lösbar befestigt ist. Die aus transparentem flexiblem Kunststoffmaterial bestehende Fensterscheibe 3 ist im Klappverdeck als etwa rechteckförmige Heckscheibe vorgesehen. Ferner besteht der Reißverschluß 2 aus einem ersten und einem zweiten Teil, an denen ein Halteband 4 und 5 unlösbar angebracht ist. Dabei ist das Halteband 4 am Verdeckbezug 1, das Halteband 5 dagegen am Randbereich der Fensterscheibe 3 über jeweils eine durch Kleben und/oder Nähen erzeugte Naht 6 befestigt.

Wie Fig. 1 ferner zeigt, ist an der Außenseite der Fensterscheibe 3 eine längs deren Randes verlaufende, aus gummielastischem Material bestehende U-förmige Randeinfassung 8 durch Kleben, Schweißen und/oder Nähen befestigt. Diese trägt an ihrem innenliegenden Schenkel 8' ein Dichtband 9 mit einer doppelseitigen Klebeschicht, wobei die dem Verdeckbezug 1 zugewandte Außenseite der Klebeschicht vor dem Einbau der Fensterscheibe 3 mit einem Papierstreifen versehen ist. Schließlich verlaufen der innenliegenden Schenkel 8' und der außenliegende Schenkel 8'' der U-förmigen Randeinfassung 8 zu ihren freien Enden hin abgeschrägt und schließen dabei mit dem Rand der Fensterscheibe 3 einen zu deren Mittelbereich hin offenen spitzen Winkel ein.

Zur Befestigung der Fensterscheibe 3 am Rand der Fensteröffnung 1' des Verdeckbezugs 1 wird der erste und zweite Teil des Reißverschlusses 2 durch den Reißverschlußschieber miteinander verbunden und der Papierstreifen von der Klebeschicht des Dichtbandes 9 entfernt. Nunmehr wird der außenliegende Schenkel 8'' der U-förmigen Randeinfassung 8 durch ein falzbeinartiges oder ähnliches Hilfswerkzeug etwas nach außen gebogen und daraufhin der Rand der Fensteröffnung 1' des Verdeckbezugs 1 in die U-förmige Randeinfassung 8 eingeführt. Schließlich liegt deren außenliegender Schenkel 8'' durch die Eigenspannung des gummielastischen Materials abdichtend am Rand der Fensteröffnung 1' des Verdeckbezugs 1 an. Zur Erhöhung der Abdichtwirkung wird nunmehr der außenliegende Schenkel 8'' der U-förmigen Randeinfassung 8 gegen das Dichtband 9 gepreßt.

Bei der etwa rechteckförmigen, der Fensterscheibe 3 entsprechenden Heckscheibe eines Klappverdecks verläuft der Reißverschluß 2 einstückig längs des Scheibenrandes, wobei sich die einander zugewandten Endabschnitte des Reißverschlusses 2 im Mittelbereich der untenliegenden Breitseite der Heckscheibe befinden. Bei eingebauter Heckscheibe werden dabei die Endabschnitte des Reißverschlusses 2 von den Schenkeln einer nicht dargestellten U-förmigen Sicherungsklammer durchsetzt, wobei ferner die freien Endabschnitte der beiden Schenkel eine am Reißverschluß anliegende Gegenplatte durchsetzen und an dieser abgebogen anliegen. Die Gegenplatte hat dabei etwa die Größe des Reißverschlußschiebers. Durch die U-förmige Sicherungsklammer und die von dieser gehaltene Gegenplatte wird ein unbefugtes Entfernen der Heckscheibe erschwert.

In Fig. 2 ist zwar die Nachrüstung der Fensterscheibe 3 veranschaulicht, jeodch entspricht die in dieser Figur gezeigte Ausführungsart weitgehend der Ausführungsart von Fig. 1; daher sind gleiche Teile mit jeweils denselben Bezugszeichen versehen. Eine mit einer U-förmigen Randeinfassung 8 und einem umlaufenden Reißverschluß 2 versehene Fensterscheibe 3 oder dgl. Flächenabschnitt kann auch in vergleichsweise einfacher Weise an einem Klappverdeck anstelle, also als Ersatz, einer in dieses eingenähten oder dgl. befestigten Fensterscheibe vorgesehen werden. Wie Fig. 2 zeigt, ist dabei am Verdeckbezug 1 innenseitig ein Befestigungsstreifen 10 durch Nähen, Kleben oder dgl. festgelegt. Vor dem Einsetzen einer neuen Fensterscheibe 3 in die Fensteröffnung 1' des Verdeckbezugs 1 wird am Halteband 4 des ersten Teils des Reißverschlusses 2 durch eine Naht 6' ein Verbreiterungsstreifen 4' angenäht und/oder angeklebt, so daß ein breites Halteband gebildet ist. Nunmehr wird der Verbreiterungssteifen 4' des Haltebands 4 und der diesem zugewandte Randbereich des Befestigungssteifens 10 mit einem geeigneten Kleber versehen und bei nahezu ganz aufgeklapptem Klappverdeck (dieses muß etwas entspannt sein, damit die Fensterscheibe 3 nach ihrem Einbau durch das daraufhin vollständig aufgeklappte Klappverdeck gespannt ist und erst dann die Klebeschicht 11 belastet wird) die neue Fensterscheibe 3 mit U-förmiger Randeinfassung 8 und Reißverschluß 2 auf der Innenseite der auszuwechselnden (alten) Fensterscheibe angeordnet. Dabei wird die Außenkante des Verbreiterungsstreifens 4' des Haltebands 4 exakt an der Außenkante des Befestigungsstreifens 10 angeordnet (durch diese Maßnahme ist ein paßgenauer Einbau der Fensterscheibe 3 gewährleistet) und sodann der Verbreiterungsstreifen 4' und der Befestigungsstreifen 10 über ihre ganze Längserstreckung gegeneinandergepreßt. Hierzu wird beispielsweise an der Außenseite des Verdeckbezugs 1 eine längs der Fensteröffnung 1' verlaufende Holzplatte oder dgl. angeordnet und längs des Verbreiterungsstreifens 4' ein Handrollgerät wie Tapetenroller oder dgl. unter Erzeugung eines hohen Anpreßdrucks mehrmals abgerollt. Bei Verwendung eines PU-Klebers brauchen dagegen die Klebeteile (Befestgungsstreifen 10 und Verbreiterungsstreifen 4') nur durch ein Klebeband, Fixiernadeln oder dgl. bis zum Aushärten des Klebers gehalten werden. Daraufhin muß der hierbei eine Schicht 11 bildende Kleber über einen bestimmten Zeitraum aushärten. Nunmehr wird die üblicherweise aus einer Nähnaht bestehende Befestigungsnaht der auszuwechselnden Fensterscheibe losgelöst und diese sowie die Fäden entfernt. Schließlich wird nun lediglich der Rand der Fensteröffnung 1' des Verdeckbezugs 1 - wie vorstehend zu Fig. 1 dargelegt - in die U-förmige Randeinfassung 8 eingeführt und der Verdeckbezug 1 an das Dichtband 9 umlaufend angepreßt. Durch das nunmehr ganz aufgeklappte Klappverdeck wird auch die neu eingesetzte Fensterscheibe 3 vollständig gespannt. Diese kann über den Reißverschluß 2 natürlich auch mehrmals durch eine neue Fensterscheibe ersetzt werden.

## Patentansprüche

1. Durch einen Reißverschluß (2) in einem Klappverdeck befestigbare Fensterscheibe (3), wobei der Reißverschluß (2) einen ersten und einen zweiten Teil aufweist, die jeweils ein seinerseits am innenliegenden Rand der Fensteröffnung (1') des Verdeckbezugs (1) bzw. an der Fensterscheibe (3) befestigtes Halteband (4 u. 5) aufweisen, während die Fensterscheibe (3) außenseitig einen unlösbar angebrachten, umlaufenden Randstreifen aufweist, dadurch gekennzeichnet, daß der Randstreifen als eine U-förmige, aus gummielastischem Material bestehende sowie am Rand der Fensteröffnung (1') des Verdeckbezugs (1) abdichtend anliegende Randeinfassung (8) ausgebildet ist, deren außenliegender Schenkel (8'') zur Aufnahme des Randes der Fensteröffnung (1') nach außen gebogen wird.

2. Fensterscheibe nach Anspruch 1, dadurch gekennzeichnet, daß die U-förmige Randeinfassung (8) an ihrem innenliegenden Schenkel (8') ein am Verdeckbezug (1) anliegendes Dichtband (9) trägt, das eine doppelseitige Klebeschicht aufweist.

3. Fensterscheibe nach Anspruch 1, dadurch gekennzeichnet, daß der innenliegende und der außenliegende Schenkel (8', 8'') der U-förmigen Randeinfassung (8) zu ihren freien Enden hin abgeschrägt verlaufen und dabei mit dem Rand der Fensterscheibe (3) einen spitzen, zu deren Mittelbereich hin offenen Winkel (α) einschließen.

4. Fensterscheibe nach Anspruch 1, wobei als Fensterscheibe (3) eine etwa rechteckförmige, flexible Heckscheibe vorgesehen ist, dadurch gekennzeichnet, daß die einander zugewandten Endabschnitte des umlaufenden Reißverschlusses (2) im Mittelbereich der untenliegenden Breitseite der Heckscheibe liegen, wobei in deren Einbauzustand die Endabschnitte des Reißverschlusses (2) von den Schenkeln einer U-förmigen Sicherungsklammer durchsetzt sind und schließlich die freien Endabschnitte der Schenkel der Sicherungsklammer eine am Reißverschluß (2) anliegende Gegenplatte durchsetzen und an dieser abgebogen anliegen.

5. Verfahren zum Auswechseln eines Flächenabschnitts, insbesondere einer flexiblen Fensterscheibe (3) eines Klappverdecks, dessen Bezug (1) einen zum Befestigen des dünnwandigen Flächenabschnitts dienenden Befestigungsstreifen (10) aufweist, nach Anspruch 1, dadurch gekennzeichnet, daß bei nahezu ganz aufgeklapptem Klappverdeck
- am auszuwechselnden Flächenabschnitt innenseitig ein die U-förmige Randeinfassung (8) aufweisender, neuer Flächenabschnitt angeordnet und das Halteband (4) des ersten Teils des Reißverschlusses (2) am Befestigungsstreifen (10) festgelegt wird,
- der auszuwechselnde Flächenabschnitt vom Randbereich des Bezugs (1) entfernt wird,
- der Rand des Bezugs (1) in die U-förmige Randeinfassung (8) eingeführt wird.

6. Verfahren nach Anspruch 5, dadurch gekennzeichnet, daß
- zuerst der erste Teil des Reißverschlusses (2) mit einem breiten Halteband (Halteband 4 und Verbreiterungsstreifen 4') versehen wird,
- daraufhin das breite Halteband (Halteband 4 und Verbreiterungsstreifen 4') des ersten Teils des Reißverschlusses (2) und der Befestigungsstreifen (10) an ihren einander zugewandten Randbereichen mit Kleber (Klebeschicht 11) versehen werden,
- sodann auf der auszuwechselnden, alten Fensterscheibe innenseitig die neue Fensterscheibe (3) mit Reißverschluß (2) und U-förmiger Randeinfassung (8) angeordnet wird, wobei die Außenkante des breiten Haltebands (Halteband 4 und Verbreiterungsstreifen 4') exakt an die Außenkante des Befestigungsstreifens (10) angrenzt und schließlich beide Teile gegeneinander gedrückt werden, worauf der Kleber (Klebeschicht 11) aushärtet,
- anschließend die auszuwechselnde, alte Fensterscheibe längs ihres Befestigungsrandes losgelöst und entfernt wird und
- schließlich der Rand der Fensteröffnung (1') des Verdeckbezugs (1) in die U-förmige Randeinfassung (8) - deren außenliegender Schenkel (8'') hierbei nach außen gebogen wird - eingeführt und an das ggf. vorhandene Dichtband (9) angedrückt wird.

## Claims

1. A window (3) for securing in a soft top or folding top by means of a slide fastener (2), the slide fastener (2) comprising a first part and a second part each having a retaining strip (4, 5) with one strip secured to the inner edge of the window opening (1') of the folding-top hood (1) and the other secured to the window (3), while the window (3) has an external non-releasably attached peripheral edge strip, characterised in that the edge strip is a U-shaped border (8) made of elastomeric material and abutting in sealing-tight manner against the edge of the window opening (1') of the hood (1), the outer limb (8'') of the border being bent outwards to receive the edge of the window opening (1').

2. A window according to claim 1, characterised in that the inner limb (8') of the U-shaped border (8) bears a sealing strip (9) adjacent the hood (1) and provided with a double-sided adhesive layer.

3. A window according to claim 1, characterised in that the inner and the outer limb (8', 8'') of the U- shaped border (8) are bevelled towards their projecting ends, and they and the edge of the window (3) include an acute angle (α) which opens towards their central region.

4. A window according to claim 1, the window (3) being a substantially rectangular flexible rear window, characterised in that the facing end portions of the peripheral slide fastener (2) lie in the central region of the wide underside of the rear window and, after installation, the ends of a U-shaped securing clamp extend through the end portions of the slide fastener (2), and, finally, the end portions of the ends of the securing clamp extend through, are bent against and abut a co-acting plate adjacent the slide fastener (2).

5. A method of replacing a surface portion, more particularly a flexible window (3) on a soft top or folding top having a hood (1) comprising a strip (10) for securing the thin-walled surface portion according to claim 1, characterised in that, when the folding top has been almost completely opened,
- a new surface portion comprising the U-shaped border (8) is disposed on the inside of the surface portion to be replaced, and the retaining strip (4) of the first part of the slide fastener (2) is secured to the strip (10),
- the surface portion to be replaced is removed from the edge region of the hood (1), and
- the edge of the hood (1) is inserted into the U- shaped border (8).

6. A method according to claim 1, characterised in that
- firstly, the first part of the slide fastener (2) is provided with a wide retaining strip (retaining strip 4 and widening strip 4'),
- next, the facing edge regions of the securing strip (10) and the wide retaining strip (retaining strip 4 and widening strip 4') of the first part of the slide fastener (2) are provided with adhesive (adhesive layer 11),
- the new window (3) with the slide fastener (2) and U-shaped border (8) are then disposed on the inside of the old window for replacement, the outer edge of the wide retaining strip (retaining strip 4 and widening strip 4') exactly bounding the outer edge of the securing strip (10), and, finally, the two parts are pressed against one another, whereupon the adhesive (adhesive layer 11) sets,
- next, the old window for replacement is loosened along its securing edge and removed, and
- finally, the edge of the window opening (1') of the folding top (1) is inserted into the U-shaped border (8) - its outer limb (8'') being bent outwards in the process - and pressed against the sealing strip (9) if present.

## Revendications

1. Fenêtre (3) fixable à une capote pliante par une fermeture à glissière (2) comportant une première partie et une deuxième partie qui ont respectivement une bande support (4 et 5) fixée de son côté au bord intérieur de l'ouverture de fenêtre (1') de la capote (1) ou sur la fenêtre (3), tandis que la fenêtre (3) comporte du côté extérieur une bande de bord circulante appliquée et non détachable, caractérisée en ce que la bande de bord est réalisée comme une bordure (8) en forme de U se composant d'une matière élastique en caoutchouc et adhérant au bord de l'ouverture de fenêtre (1') de la capote (1) en réalisant l'étanchéité, bordure (8) dont la branche extérieure (8'') est pliée vers l'extérieur pour recevoir le bord de l'ouverture de fenêtre (1').

2. Fenêtre selon la revendication 1, caractérisée en ce que la bordure en forme de U porte sur sa branche intérieure (8') une bande d'étanchéité (9) adhérant à la capote (1), qui comprend une couche de colle des deux côtés.

3. Fenêtre selon la revendication 1, caractérisée en ce que les branches intérieure et extérieure (8', 8'') de la bordure (8) en forme de U se développent en biseau en direction de leurs extrémités libres et en outre forment un angle aigu ouvert en direction de leur zone centrale.

4. Fenêtre selon la revendication 1 prévue sous la forme d'une lunette arrière flexible, à peu près rectangulaire, caractérisée en ce que les parties d'extrémités tournées l'une vers l'autre de la fermeture à glissière (2) sont situées dans la zone centrale du côté large de la lunette, les parties d'extrémités de la fermeture à glissière (2) étant traversées, à l'état monté, par les branches d'une agrafe de sécurité en forme de U, et enfin les segments d'extrémités libres des branches de l'agrafe de sécurité traversant une contreplaque adhérant à la fermeture à glissière (2) et adhérant à celle-ci de manière pliée.

5. Procédé pour remplacer une partie de surface, en particulier une fenêtre flexible(3) d'une capote, dont le revêtement (1) comprend une bande de fixation (10) servant à fixer la partie de surface de paroi mince, selon la revendication 1, caractérisé en ce que :
- sur la partie de surface à changer, est placée, du côté intérieur, une nouvelle partie de surface comportant la bordure en forme de U, et la bande support (4) de la première partie de la fixation à glissière (2) est fixée sur la bande de fixation (10),
- la partie de surface à changer est éloignée de la zone de bord du revêtement (1),
- le bord du revêtement (1) est introduit dans la bordure (8) en forme de U.

6. Procédé selon la revendication 5, caractérisé en ce que :
- la première partie de la fermeture à glissière (2) est munie d'une bande support large (bande support 4 et bande d'élargissement 4'),
- après cela la bande support large (bande support 4 et bande d'élargissement 4') de la première partie de la fermeture à glissière (2) et de la bande de fixation (10), sont munies de colle (couche de colle 11) sur leurs zones de bord tournées l'une vers l'autre,
- ensuite, sur l'ancienne fenêtre à changer, est placée du côté interne la nouvelle fenêtre (3) avec fermeture à glissière (2) et bordure (8) en forme de U, le bord extérieur de la bande support large (bande support 4 et bande d'élargissement 4') arrivant exactement à la imite du bord extérieur de la bande de fixation (10), et enfin les deux parties sont pressées l'une contre l'autre, à la suite de quoi la colle (couche de colle 11) durcit,
- ensuite l'ancienne fenêtre à changer est détachée le long de son bord de fixation et enlevée et,
- enfin le bord de l'ouverture de fenêtre (1') de la capote (1) est introduit dans la bordure (8) en forme de U - dont la branche (8'') extérieure est pliée vers l'extérieur - et appuyé contre la bande d'étanchéité (9) éventuellement existante.
